# EUROPEAN PATENT SPECIFICATION

(11) **EP 1 592 225 B1**
(45) Date of publication and mention of the grant of the patent: **01.08.2012**
(21) Application number: 05004588.9
(22) Date of filing: 02.03.2005
(51) Int. Cl.: H04N 1/405

(54) **Threshold matrix and method of generating a threshold matrix**
Schwellwertmatrix und Verfahren zur Generierung einer Schwellwertmatrix
Matrice de seuil et procédé de génération de matrice de seuil

(30) Priority: 05.03.2004 JP 2004063108
(43) Date of publication of application: 02.11.2005
(73) Proprietor: FUJIFILM Corporation, Minato-ku Tokyo (JP)
(72) Inventor: Inoue, Yoshiaki, c/o Fuji Photo Film Co., Ltd., Ashigarakami-gun Kanagawa 258-8538 (JP); Sugizaki, Makoto, c/o Fuji Photo Film Co., Ltd., Ashigarakami-gun Kanagawa 258-8538 (JP); Kobayashi, Fumikazu, Haibara-gun Shizuoka-ken 421-0396 (JP); Kawauchi, Ikuo, Haibara-gun Shizuoka-ken 421-0396 (JP)
(74) Representative: Klunker . Schmitt-Nilson . Hirsch

(56) References cited:
- WO-A-00/59209
- US-A- 5 111 310
- US-A- 5 689 623
- US-B1- 6 335 989
- US-B1- 6 493 112
- ROLLESTON R J ET AL: "HALFTONING WITH RANDOM CORRELATED NOISE" JOURNAL OF ELECTRONIC IMAGING, SPIE / IS & T, vol. 1, no. 2, 1 April 1992 (1992-04-01), pages 209-217, XP000323344 ISSN: 1017-9909
- YAO M ET AL: "MODIFIED APPROACH TO THE CONSTRUCTION OF A BLUE NOISE MASK" JOURNAL OF ELECTRONIC IMAGING, SPIE / IS & T, vol. 3, no. 1, 1 January 1994 (1994-01-01), pages 92-97, XP000420587 ISSN: 1017-9909

## Description

### BACKGROUND OF THE INVENTION

### Field of the Invention:

The present invention relates to a threshold matrix and a method of generating such a threshold matrix, for generating a screen which is called an FM screen or a stochastic screen for converting a continuous-tone image into a dot pattern representative of a binary image. More particularly, the present invention relates to a threshold matrix and a method of generating such a threshold matrix that are suitable for use in a printing-related apparatus (output system) such as a filmsetter, a platesetter, a CTP (Computer To Plate) apparatus, a CTC (Computer To Cylinder) apparatus, a DDCP (Direct Digital Color Proof) system, etc., an ink jet printer, or an electrophotographic printer.

### Description of the Related Art:

Heretofore, so-called AM (Amplitude Modulation) screens characterized by screen ruling, screen angle, and dot shape, and FM (Frequency Modulation) screens have been used in the art of printing.

A process of generating a threshold matrix for FM screens is disclosed in Japanese Laid-Open Patent Publication No. 8-265566.

According to the disclosed process, an array of elements of a threshold matrix, i.e., an array of thresholds, is generated in an ascending order or a descending order by determining threshold positions such that the position of an already determined threshold is spaced the greatest distance from the position of a threshold to be newly determined. The dot pattern of a binary image that is generated using the threshold matrix thus produced has dots which are not localized. Even when a dot pattern is generated using a plurality of such threshold matrixes that are juxtaposed, the dot pattern does not suffer a periodic pattern produced by the repetition of threshold matrixes.

A plurality of patent documents given below are relevant to the generation of a threshold matrix.

Japanese Patent No. 3400316 discloses a method of correcting halftone image data by extracting a pixel having a weakest low-frequency component of a certain dot pattern, from white pixels (unblackened pixels), and a pixel having a strongest low-frequency component of the dot pattern, from blackened pixels, and switching around the extracted white and blackened pixels. Thus, the dot pattern is intended to be smoothed or leveled.

Japanese Laid-Open Patent Publication No. 2001-292317 reveals a process of determining threshold positions in a threshold matrix such that a next blackened pixel is assigned to a position having a weakest low-frequency component of the threshold matrix.

Japanese Laid-Open Patent Publication No. 2002-368995 shows a process of determining threshold positions in a threshold matrix such that when an array of thresholds in the threshold matrix has been determined up to a certain gradation and a threshold position for a next gradation is to be determined, blackened pixels are assigned to positions for not strengthening a low-frequency component.

Japanese Laid-Open Patent Publication No. 2002-369005 discloses a process of generating a threshold matrix according to the process shown in Japanese Patent No. 3400316, Japanese Laid-Open Patent Publication No. 2001-292317 or Japanese Laid-Open Patent Publication No. 2002-368995, based on an ideal dot pattern at a certain gradation which is given.

When an FM screen is used for offset printing, it causes shortcomings in that the quality of printed images suffers some graininess. FM screens also cause disadvantages in that a dot gain tends to become large and images are reproduced unstably when images are printed, or when films are output in an intermediate printing process, or when a printing plate is output by a CTP apparatus.

According to the conventional FM screening process, when a dot size is determined to be the size of a dot made up of one pixel or a dot made up of four pixels according to a 1 (1 × 1)-pixel FM screen or a 4 (2 × 2)-pixel FM screen, an array of thresholds of a threshold matrix is determined by an algorithm for generating FM screens, thus determining an output quality, and only the dot size serves as a parameter for determining the quality of FM screens. For example, if a dot size is determined to be a 3 × 3-pixel FM screen dot size with respect to an output system which is incapable of stably reproducing 2 × 2-pixel FM screen dots for highlight areas, then the resolution (referred to as pattern frequency or pattern resolution) for intermediate tones is lowered, resulting in a reduction in the quality of images.

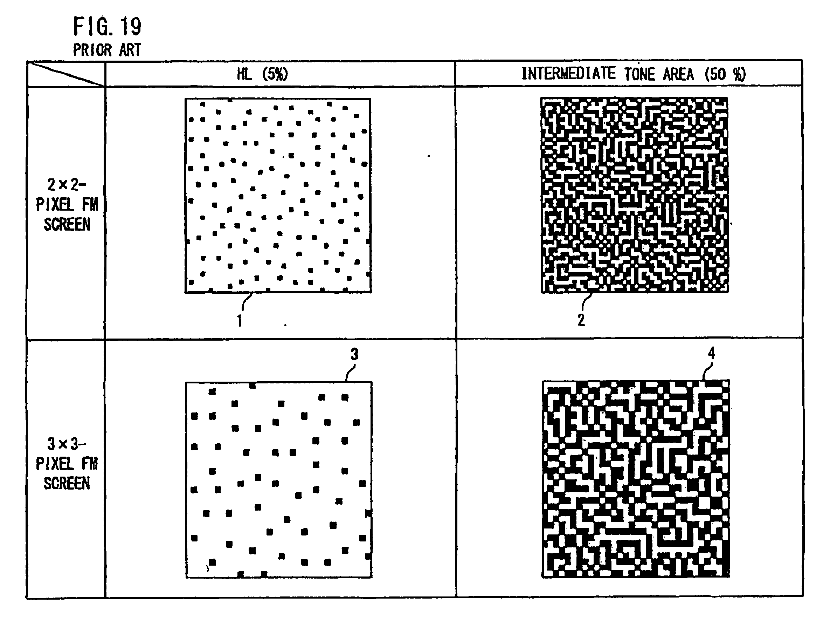

FIG. 19 of the accompanying drawings shows a conventional dot pattern 1 in a highlight area where the dot percentage of a 2 × 2-pixel FM screen is 5%, a conventional dot pattern 2 in an intermediate tone area where the dot percentage of the 2 × 2-pixel FM screen is 50%, a conventional dot pattern 3 in a highlight area where the dot percentage of a 3 × 3-pixel FM screen is 5%, and a conventional dot pattern 4 in an intermediate tone area where the dot percentage of the 3 × 3-pixel FM screen is 50%.

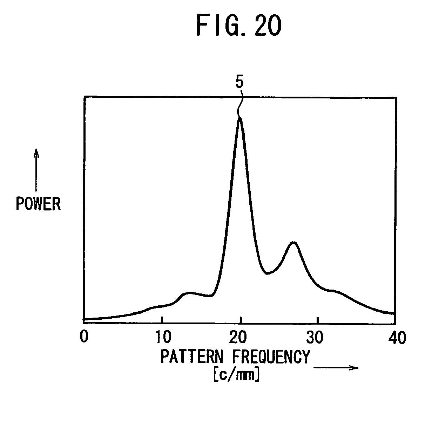

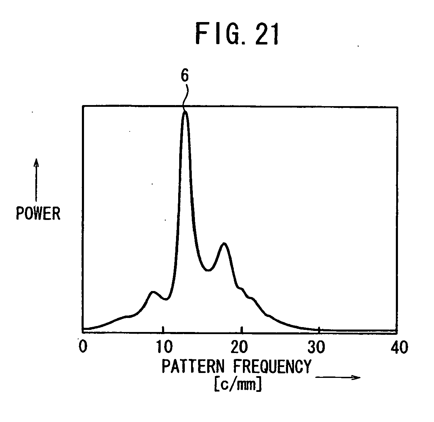

FIG. 20 of the accompanying drawings shows a power spectrum generated when the dot pattern 2 of the 2 × 2-pixel FM screened shown in FIG. 19 is FFTed (Fast-Fourier-Transformed), and FIG. 21 of the accompanying drawings shows a power spectrum generated when the dot pattern 4 of the 3 × 3-pixel FM screen shown in FIG. 19 is FFTed.

In FIG. 19, at the dot percentage of 50% in the intermediate tone area, the dot pattern 2 of the 2 × 2-pixel FM screen suffers less graininess than the dot pattern 4 of the 3 × 3-pixel FM screen, but has the dot percentage less reproducible in the printed image. On the other hand, at the dot percentage of 50% in the intermediate tone area, the dot pattern 4 of the 3 × 3-pixel FM screen has a pattern frequency 6 of about 13 c/mm which is lower than the pattern frequency 5 of about 20 c/mm of the dot pattern 2 of the 2 × 2-pixel FM screen. The pattern frequencies 5, 6 which are of peak values are also called a peak spatial frequency fpeak.

The output resolution of an output system such as an imagesetter, a CTP apparatus, etc. (the output resolution of an output system will hereinafter be referred to as output resolution R) is set to 2540 pixels/inch = 100 pixels/mm or 2400 pixels/inch = 94.488 pixels/mm, for example. With those settings, the dot size of the 1 × 1 pixel FM screen is 10 µm × 10 µm (10.6 µm × 10.6 pm), and the dot size of the 2 × 2 pixel FM screen is 20 pm × 20 µm (21.2 µm × 21.2 µm). In this description, the output resolution R is different from the pattern frequencies 5, 6 of the dot patterns 2, 4 shown in FIGS. 19, 20.

The graininess and large dot gains in the dot patterns 2, 4 of the FM screen are considered to result from a relatively long periphery length of dots per unit area of a dot pattern. The conventional FM screens have small dots compared to the dots of a dot pattern in the AM screens, and have a greater periphery length of dots per unit area of a dot pattern than that of the AM screens at the same dot percentage.

Further, in a general image forming apparatus such as a filmsetter, a platesetter, a CTP apparatus, a CTC apparatus, a DDCP system, an ink jet printer, or an electrophotographic printer, a dot pattern representing a two-dimensional image is formed on a recording medium by scanning at a high speed in a main scanning direction and at a low speed in an auxiliary scanning direction that is perpendicular to the main scanning direction.

Also, an image forming apparatus capable of recording a plurality of pixels at a time, i.e., capable of multi-image recording (e.g., multi-beam recording if laser beams are used) is gradually used, for increasing the rate at which an image is recorded in the main scanning direction.

However, unequal scanning lines in multi-image recording (e.g., unequal cross sectional shapes of beams or unequal beam intensity if laser beams are used) cause shortcomings in that the quality of printed images suffers unevenness or irregularity of hue or shade in the image. In this case, unevenness caused by each recording of image (or due to the repetition of recording with a unit of plural beams) is visually perceptible. Also, the finer the dot pattern output from the image forming apparatus is, the more perceptible the unevenness caused by each recording of image (or due to the repetition of recording with a unit of plural beams) is. Especially, FM screens, which have fine or high-resolution dot patterns, tend to suffer the problem.

### SUMMARY OF THE INVENTION

It is an object of the present invention to provide a threshold matrix and a method of generating the same that will solve the problems of the conventional FM screens or the like. The generated threshold matrix is capable of generating a dot pattern in which unevenness of hue or shade in the image is less visually perceptible.

Another object of the present invention is to provide a threshold matrix and a method of generating the same, which is capable of generating a dot pattern in which unevenness of hue or shade in the image in a scanning direction is less visually perceptible.

According to the present invention, there is provided a method of generating a threshold matrix for converting a continuous-tone image into a dot pattern representing a binary image, the method comprising the steps of claim 1.

US-B1-6 335 989 discloses to generate a threshold matrix by filtering a white noise pattern with a bandpass filter. The bandpass filter has a particular main frequency. The resulting pattern is used for determining dot candidates. Similar threshold matrices are known from US-A-5 689 623 and US-B1-6 493 112.

According to the present invention, a dot pattern forming a binary image has the pattern frequency. Also, the dot periphery length in the dot pattern can be short in a direction in which the intensity is weakened.

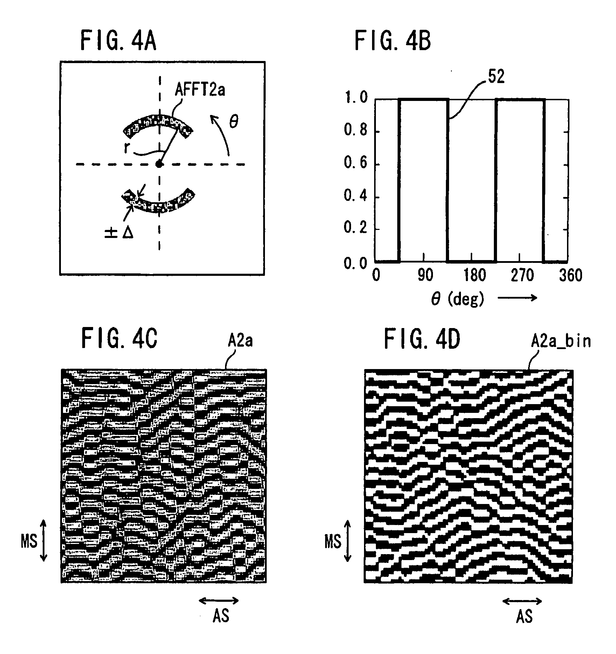

In the present invention, there are two ways of generating a binary pattern from a white noise pattern. The first one is as follows. The white noise pattern is converted into a frequency-domain pattern. The frequency-domain pattern is subjected to a bandpass filtering process. The filtered frequency-domain pattern is converted again into a space-domain pattern. Finally, the space-domain pattern is digitized into the binary data. The second one is as follows. The white noise pattern is filtered by a spatial filter having a certain pattern frequency in a space-domain, and the space-domain pattern is digitized into the binary pattern. The pattern frequency is determined to be a frequency having a predetermined power, e.g., the power of 1/2 or more of the strongest power in the frequencies. A main (or center) frequency of the bandpass characteristic of the bandpass filtering is substantially same as the pattern frequency. The term "substantially" is used since the pattern frequency may include the fluctuation component Δ shown in FIG. 4A, for example.

According to the present invention, the intensity distribution of the bandpass characteristic at angles at least corresponding to a main scanning direction of the dot pattern is weakened. Thus, the dot periphery length in the main scanning direction in the dot pattern can be short.

According to the present invention, the intensity distribution of the bandpass characteristic at angles corresponding to a main scanning direction and to an auxiliary scanning direction of the dot pattern is weakened. Thus, the dot periphery lengths in the main and auxiliary scanning directions in the dot pattern can be short.

According to the present invention, there is provided a threshold matrix for converting a continuous-tone image into a dot pattern representing a binary image having the features of claim 4.

According to the present invention, the dot pattern forming a binary image has the predetermined pattern frequency, and the dot periphery length in the dot pattern can be short in a direction in which the intensity is weakened.

In this case, the intensity distribution of the frequency components at angles at least corresponding to a main scanning direction of the dot pattern is weakened, so that the dot periphery length in the main scanning direction of the dot pattern can be short.

Further, the intensity distribution of frequency components at angles corresponding to a main scanning direction and to an auxiliary scanning direction of the dot pattern is weakened, so that the dot periphery lengths in the main and auxiliary scanning directions of the dot pattern can be distributed uniformly.

According to the present invention, there is provided a threshold matrix for converting a continuous-tone image into a dot pattern representing a binary image, wherein main frequency components obtained by conversion of the threshold matrix into frequency-domain data have a substantially constant frequency for all angles, and intensity distribution of the main frequency components is modulated based on the angles.

In the dot pattern generated by the threshold matrix of the present invention, unevenness of hue or shade in the image in a desired direction can be less visually perceptible.

In this case, the intensity distribution of the frequency components at angles at least corresponding to a main scanning direction of the dot pattern is weakened, so that unevenness in the main scanning direction of the dot pattern can be less visually perceptible.

The intensity distribution of frequency components at angles corresponding to a main scanning direction and to an auxiliary scanning direction of the dot pattern is weakened, so that unevenness in the main and auxiliary scanning directions of the dot pattern can be less visually perceptible.

According to the present invention, a dot pattern in which unevenness of hue or shade in the image is less visually perceptible can be generated.

Further, according to the present invention, a dot pattern in which unevenness of hue or shade in the image in a desired scanning direction is less visually perceptible can be generated.

The threshold matrix is stored as data in a storage unit.

The storage unit which stores the threshold matrix as data is incorporated in a raster image processor.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a block diagram of a threshold matrix generating system to which a process of generating a threshold matrix according to an embodiment of the present invention is applied;
FIG. 2 is a flowchart of an overall sequence of the process of generating a threshold matrix which is carried out by the threshold matrix generating system shown in FIG. 1;
FIG. 3 is a diagram of a white noise pattern generated at a dot percentage of 50% by 1 × 1 pixel FM-screened dots;
FIG. 4A is a diagram showing the frequency-domain of a pattern frequency bandpass filter;
FIG. 4B is a diagram showing intensity vs. angle in FIG. 4A;
FIG. 4C is a diagram showing space-domain data of a continuous-tone image;
FIG. 4D is a diagram showing binary data digitized from the space-domain data of the continuous-tone image;
FIG. 5A is a diagram showing the frequency-domain of another pattern frequency bandpass filter;
FIG. 5B is a diagram showing intensity vs. angle in FIG. 5A;
FIG. 5C is a diagram showing space-domain data of a continuous-tone image;
FIG. 5D is a diagram showing binary data digitized from the space-domain data of the continuous-tone image;
FIG. 6A is a diagram showing the frequency-domain of still another pattern frequency bandpass filter;
FIG. 6B is a diagram showing intensity vs. angle in FIG. 6A;
FIG. 6C is a diagram showing space-domain data of a continuous-tone image;
FIG. 6D is a diagram showing binary data digitized from the space-domain data of the continuous-tone image;
FIG. 7 is a diagram showing the number of dots vs. dot percentage;
FIG. 8A is a diagram showing a periphery length of small dots;
FIG. 8B is a diagram showing a periphery length of large dots at the same dot percentage as with FIG. 8A;
FIG. 9 is a flowchart of a detailed sequence of a threshold position determining process in step S4 of the overall sequence shown in FIG. 2;
FIG. 10 is a diagram illustrative of a process of determining a threshold position for a next gradation;
FIG. 11A is a diagram showing threshold candidate positions;
FIG. 11B is a diagram showing smallest-size dots placed in the threshold candidate positions;
FIG. 12A is a diagram showing a dot pattern having 2 × 2-pixel dots of a minimum size and a dot percentage of 30%;
FIG. 12B is a diagram showing a pattern with stressed dark and light areas which is produced by processing the dot pattern shown in FIG. 12A with a visual characteristic filter;
FIG. 12C is a diagram showing a dot pattern of a conventional 2 × 2-pixel dot FM screen;
FIG. 12D is a diagram showing a pattern with stressed dark and light areas which is produced by processing the dot pattern shown in FIG. 12C with a visual characteristic filter;
FIG. 13A is a diagram showing a dot pattern having a dot percentage of 10% which is generated by the threshold matrix according to the embodiment;
FIG. 13B is a diagram showing a dot pattern having a dot percentage of 20% which is generated by the threshold matrix according to the embodiment;
FIG. 13C is a diagram showing a dot pattern having a dot percentage of 30% which is generated by the threshold matrix according to the embodiment;
FIG. 13D is a diagram showing a dot pattern having a dot percentage of 40% which is generated by the threshold matrix according to the embodiment;
FIG. 13E is a diagram showing a dot pattern having a dot percentage of 50% which is generated by the threshold matrix according to the embodiment;
FIG. 13F is a diagram showing a dot pattern having a dot percentage of 70% which is generated by the threshold matrix according to the embodiment;
FIG. 14 is a table showing average periphery length proportions in the main scanning direction, average periphery length proportions in the auxiliary scanning direction and ratios between the average periphery length proportion in the main scanning direction and average periphery length proportion in the auxiliary scanning direction, concerning binary patterns representing candidate positions for placing dots in FIGS. 4D and 5D, respectively;
FIG. 15 is a diagram showing the average periphery length proportion;
FIG. 16 is a diagram showing power with its density depending on intensity at each frequency when a threshold matrix is converted into frequency-domain data;
FIG. 17 is a diagram showing a power spectrum in which power vs. angle of frequency-domain data of the threshold matrix in FIG. 16 is presented;
FIG. 18 is a block diagram of a printing/platemaking system incorporating threshold matrixes generated by a threshold matrix generating apparatus;
FIG. 19 is a diagram showing dot patterns at dot percentages of 5% and 50% of 2 × 2 pixel FM-screened dots and dot patterns at dot percentages of 5% and 50% of 3 × 3 pixel FM-screened dots according to conventional art;
FIG. 20 is a diagram showing a power spectrum generated when the dot pattern at the dot percentage of 50% of the 2 × 2 pixel FM-screened dots is processed by FFT; and
FIG. 21 is a diagram showing a power spectrum generated when the dot pattern at the dot percentage of 50% of the 3 × 3 pixel FM-screened dots is processed by FFT.

### DESCRIPTION OF THE PREFERRED EMBODIMENTS

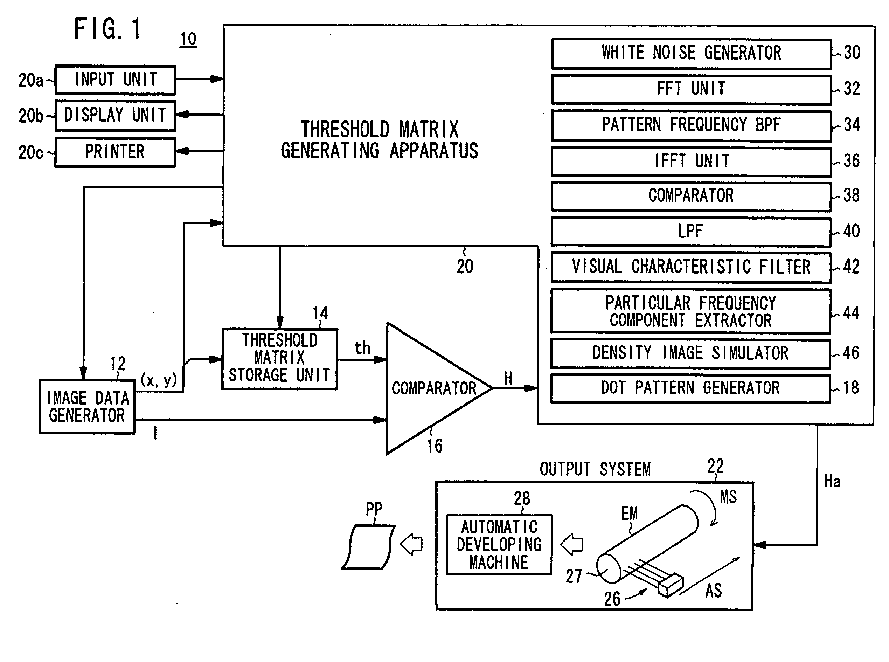

FIG. 1 shows a basic arrangement of a threshold matrix generating system 10 to which a process of generating a threshold matrix according to the present invention is applied.

As shown in FIG. 1, the threshold matrix generating system 10 has an image data generator 12 for generating image data I including a test pattern of uniform density and also generating a two-dimensional address (x, y) of the image data I, a threshold matrix storage unit 14 for storing a plurality of threshold matrixes TM and outputting a threshold th read by the address (x, y), a comparator 16 for comparing the threshold th and the image data I and outputting binary image data H, a threshold matrix generating apparatus 20 including a dot pattern generator 18 for generating dot pattern data Ha corresponding to the binary image data H output from the comparator 16, the threshold matrix generating apparatus 20 serving to determine a threshold array (threshold positions) of the threshold matrixes TM such that a dot pattern represented by the dot pattern data Ha will be a desired dot pattern, and an output system 22 for forming the dot pattern corresponding to the dot pattern data Ha on a film, a printing plate PP, or a printed material.

The threshold matrix storage unit 14 comprises a recording medium such as a hard disk or the like. The image data generator 12, the comparator 16, the dot pattern generator 18, and the threshold matrix generating apparatus 20 may comprise function realizing means that are achieved when a program stored in a personal computer (including a CPU, a memory, an input unit 20a such as a keyboard, a mouse, etc., and an output unit such as a display unit 20b, a printer 20c, etc.) is executed by the computer. The function realizing means of the threshold matrix generating apparatus 20 may comprise a piece of hardware. An arrangement and operation of the function realizing means of the threshold matrix generating apparatus 20 will be described later on.

In the present embodiment, the output system 22 basically comprises a CTP apparatus having an exposure unit (also referred to as a multi-beam exposure unit) 26 and a drum 27 with printing plate materials EM wound thereon. The exposure unit 26 applies a plurality of laser beams (recording beams), which are turned on and off for each pixel depending on the dot pattern data Ha, to the printing plate materials EM on the drum 27 that is being rotated in a main scanning direction MS by a main scanning motor (not shown) at a high speed, while the exposure unit 26 is being moved in an auxiliary scanning direction AS along the axis of the drum 27 by an auxiliary scanning motor (not shown). At this time, a dot pattern representing a two-dimensional image as a latent image is formed on each of the printing plate materials EM. The laser beams applied to the printing plate materials EM may be in several hundred channels.

The printing plate materials EM (usually, four printing plate materials with different screen angles for C, M, Y, K printing plates) on which the dot patterns are formed as latent images are developed by an automatic developing machine 28, producing printing plates PP with visible dot patterns formed thereon. The produced printing plates PP are mounted on a printing press (not shown), and inks are applied to the mounted printing plates PP.

The printing plate materials EM contain a photosensitive material which should preferably be a positive image recording material including an alkaline dissolvable binder, a substance for generating heat upon absorption of an infrared radiation or a near-infrared radiation, and a thermally decomposable substance for substantially lowering the dissolvability of the binder when not thermally decomposed, as disclosed in Japanese Patent No. 3461377. The printing plates PP should preferably be made of an image recording material including a photosensitive material which comprises a support base such as an aluminum sheet, a polyester film, or the like, and a layer including the above substances and mounted on the support base.

The alkaline dissolvable binder contains a phenolic resin, an acrylic resin, or a polyurethane resin. The substance for generating heat upon absorption of an infrared radiation or a near-infrared radiation comprises a dye, a pigment, or carbon black. The thermally decomposable substance for substantially lowering the dissolvability of the binder when not thermally decomposed comprises onium salt, diazonium salt, or a substance containing a quinone diazide compound.

When the inks applied to the printing plates PP are transferred to a printing sheet as a recording medium such as a photographic sheet or the like, a desired printed material comprising an image formed on the printing sheet is obtained.

The output system 22 is not limited to the scanning exposure apparatus employing laser beams, but may be an apparatus for forming an image on a film, a printing plate, or a printed material according to a planar exposure process or an ink jet process, or a CTC printing machine.

The threshold array of the threshold matrixes TM stored in the threshold matrix storage unit 14 can be recorded and carried around in a portable recording medium which is a packaged medium such as a DVD, a CD-ROM, a CD-R, a semiconductor memory, or the like.

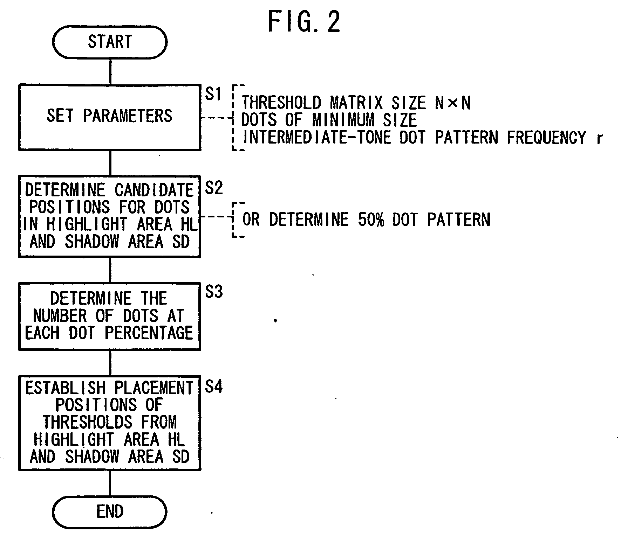

A process of generating a threshold matrix using the threshold matrix generating system shown in FIG. 1 will be described below with reference to a flowchart of FIG. 2. The process shown in FIG. 2 is based on a program which is mainly executed by the threshold matrix generating apparatus 20.

In step S1 shown in FIG. 2, three parameters are set. The first parameter represents the size of a threshold matrix TM to be stored in the threshold matrix storage unit 14, i.e., the size N × N of a threshold matrix TM which contains N × N thresholds corresponding to N × N pixels. The threshold matrix TM contains thresholds th ranging from 0 to thmax at respective positions (elements) determined by addresses (x, y). The maximum threshold thmax has a value that is set to "255" for a system having 8-bit gradations and "65535" for a system having 16-bit gradations. The size N × N of a square threshold matrix will be described below. However, the present invention is also applicable to the size N × M of an elongate rectangular threshold matrix. Actually, a plurality of threshold matrixes TM having the same threshold array and matrix size N × N and laid out as tiles (referred to as a superthreshold matrix STM) are used depending on the size of an image to be processed. The thresholds th of the threshold matrix TM is determined in view of the threshold array of the entire superthreshold matrix STM.

In the present embodiment, the size of a pixel that can be output from the output system 22 is represented by 10 µm × 10 µm, which corresponds to a 1 × 1-pixel dot or 1 pixel. The size 10 µm × 10 µm is a minimum unit that can be controlled by the exposure unit 26 for recording image data on the printing plate materials EM.

The second parameter represents the number of pixels that make up a dot of a minimum size which can stably be output from the output system 22, or stated otherwise, can stably be formed on the printing plates PP which are output from the output system 22. The dot of a minimum size may be set to a 1-pixel dot (the number of pixels that make up a dot of a minimum size is one), a 2-pixel dot, a 3-pixel dot, a 2 × 2-pixel (the number of pixels that make up a dot of a minimum size is four) dot, a 2 × 3-pixel (6-pixel) dot, a 3 × 3-pixel (9-pixel) dot, etc. In the present embodiment, it is assumed that a dot of a minimum size that can stably be formed on the printing plates PP (in reality, the printed material) is a 2 × 2-pixel dot whose dot size is represented by 2 × 2 = 4 pixels.

The third parameter represents the pattern frequency at a predetermined dot percentage (also referred to as density percentage) in intermediate tones having a dot percentage in the range from 10% to 50%, i.e., the pattern frequency r of an intermediate tone dot pattern. The pattern frequency r of an intermediate tone dot pattern represents the peak spatial frequency fpeak c/mm of a dot pattern in an intermediate tone.

In reality, the peak spatial frequency fpeak is concerned with the reproduction of image details, and also affects image quality in terms of graininess. In the present embodiment, the pattern frequency r is set to a visually sufficiently small value of 20 c/mm, i.e., 508 (20 × 25.4) LPI (Line Per Inch) (fpeak = r = 20 c/mm).

The pattern frequency r is determined considering a frequency having a predetermined power (intensity or magnitude), e.g., power of 1/2 or more of the strongest power.

In step S2, a dot candidate position in a highlight area HL and a dot candidate position in a shadow area SD are determined to provide the pattern frequency r in an intermediate tone. Otherwise, a dot candidate position for placing dots is determined at the dot percentage 50% with the pattern frequency r.

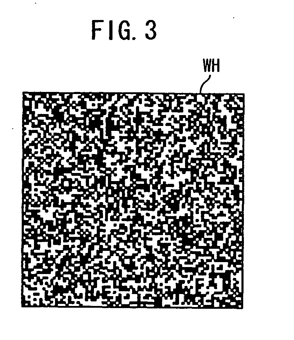

First, as shown in FIG. 3, a white noise generator 30 generates a white noise pattern WH at a dot percentage of 50% having the same size N × N as the size N × N of the threshold matrix TM. The white noise pattern WH is an image where 1-pixel dots are randomly positioned in a spatial domain. The white noise pattern WH can be generated so as to have desired values in an intermediate tone having a dot percentage in the range from 10% to 90%. In this embodiment, the white noise pattern WH at a dot percentage of 50% is generated.

Second, the white noise pattern WH is FFTed by an FFT (Fast Fourier Transform) unit 32 to be converted into a frequency-domain pattern. Then, the pattern is subjected to a bandpass filtering process at the pattern frequency r (± Δ, "Δ" means a fluctuation component) by a pattern frequency bandpass filter (pattern frequency BPF) 34, as shown in FIG. 4A. The pattern frequency bandpass filter 34 has a bandpass characteristic in which a main frequency (or center frequency) thereof is substantially same as the pattern frequency. The intensity distribution of the bandpass characteristic is modulated based on angles θ.

The characteristics of the pattern frequency bandpass filter 34 can be changed. In this embodiment, the pattern frequency bandpass filter 34 has certain characteristics so that frequency-domain data AFFT2a having isotropy at a radius (pattern frequency) r for angles θ can be obtained as shown in FIG. 4A. Also, the pattern frequency bandpass filter 34 has certain characteristics so that the frequency-domain data AFFT2a having a rectangular intensity distribution 52 can be obtained as shown in FIG. 4B, in which the intensity of a dot pattern at angles corresponding to the main scanning direction MS is weakened. In the intensity distribution 52, the intensity is 0 (0.0 in FIG. 4B) for θ having ranges of 0° ± 32.4° and 180° ± 32.4°, and maximum (1.0 in FIG. 4B) for θ of the other angles.

Third, the frequency-domain data AFFT2a, which has a ring shape with a radius of the pattern frequency r but partially filtering off horizontal data, is IFFTed by an IFFT (Inverse Fast Fourier Transform) unit 36, producing space-domain data A2a of a continuous-tone image, as shown in FIG. 4C.

In FIG. 4C, the auxiliary scanning direction AS of a dot pattern is perpendicular to the vertical axis in the figure (parallel to the horizontal axis), while the main scanning direction MS of a dot pattern is perpendicular to the horizontal axis in the figure (parallel to the vertical axis). The angles θ corresponding to the main scanning direction MS in the dot pattern in FIG. 4C are 0° and 180° in FIGS. 4A and 4B.

Fourth, the value of each of the pixels of the spatial-domain data A2a is compared with a central gradation value (e.g., 127 if the maximum gradation is 255) by a comparator 38, generating binary data A2a_bin, as shown in FIG. 4D.

Of the binary data A2a_bin, blackened portions (areas) serve as dot candidate positions in highlight areas HL and white portions (areas) serve as dot candidate positions in shadow areas SD.

The pattern of the binary data A2a_bin may not necessarily be produced when the dot percentage is 50%. In this embodiment, however, the binary data A2a_bin is prepared to represent a 50% dot pattern.

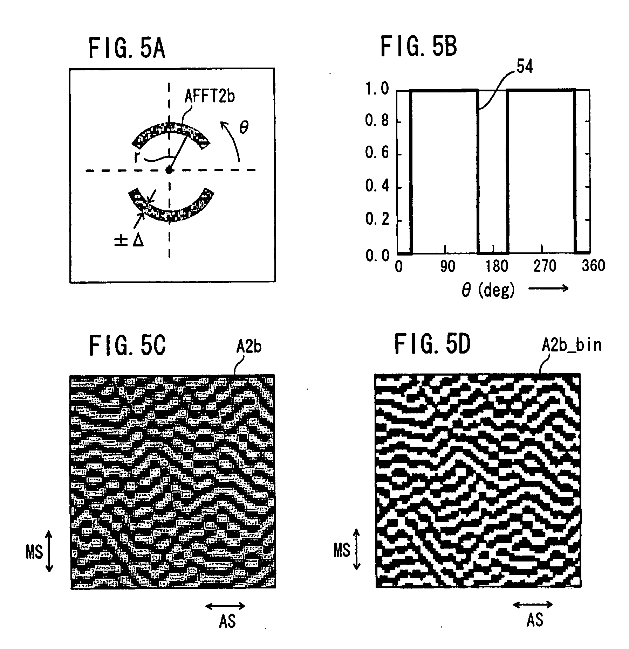

Other than the filter 34 for obtaining the data shown in FIGS. 4A and 4B, another pattern frequency bandpass filter 34 can also be used. The other pattern frequency bandpass filter 34 may have certain characteristics so that frequency-domain data AFFT2b having isotropy at a radius (pattern frequency) r for angles θ can be obtained as shown in FIG. 5A. Also, the other pattern frequency bandpass filter 34 may have certain characteristics so that the frequency-domain data AFFT2b having a rectangular intensity distribution 54 can be obtained as shown in FIG. 5B, in which the intensity of a dot pattern at angles corresponding to the main scanning direction MS is weakened and a range of the angles for weakening the intensity is narrower than a range of the angles in FIG. 4B.

In the intensity distribution 54, the intensity is 0 (0.0 in FIG. 5B) for θ having ranges of 0° ± 26.6° and 180° ± 26.6°, and maximum (1.0 in FIG. 5B) for θ of the other angles.

The frequency-domain data AFFT2b is IFFTed by the IFFT unit 36, producing space-domain data A2b of a continuous-tone image, as shown in FIG. 5C. Then, the value of each of the pixels of the spatial-domain data A2b is compared with a central gradation value by the comparator 38, generating binary data A2b_bin, as shown in FIG. 5D.

Of the binary data A2b_bin, blackened portions (areas) serve as dot candidate positions in highlight areas HL and white portions (areas) serve as dot candidate positions in shadow areas SD.

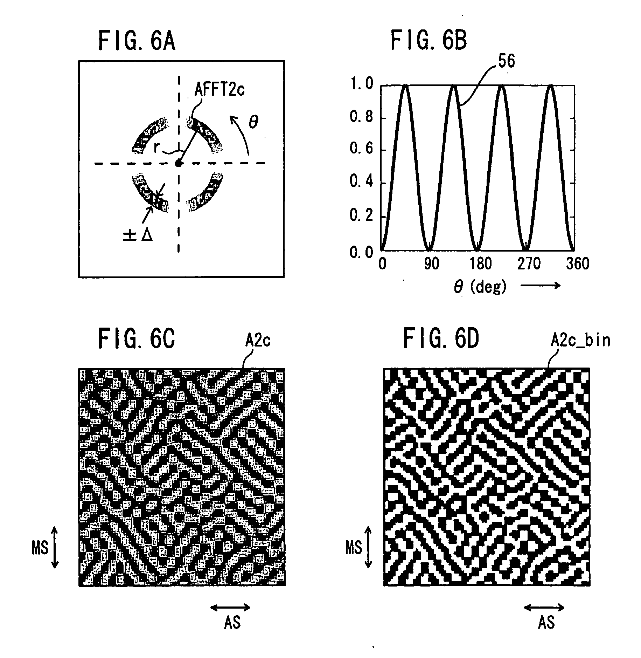

Other than the filters 34 for obtaining the data shown in FIGS. 4A, 4B, 5A and 5B, a still another pattern frequency bandpass filter 34 can also be used. The still another pattern frequency bandpass filter 34 may have certain characteristic so that frequency-domain data AFFT2c having isotropy at a radius (pattern frequency) r for angles θ can be obtained as shown in FIG. 6A. Also, the still another pattern frequency bandpass filter 34 may have certain characteristic so that the frequency-domain data AFFT2c having an intensity distribution 56 can be obtained as shown in FIG. 6B, in which the intensity is modulated sinusoidally for the angles θ.

In the still another pattern frequency bandpass filter 34 for obtaining the data shown in FIGS. 6A and 6B, the intensity of a dot pattern at angles corresponding to the main scanning direction MS and to the auxiliary scanning direction AS is weakened.

The frequency-domain data AFFT2c is IFFTed by the IFFT unit 36, producing space-domain data A2c of a continuous-tone image, as shown in FIG. 6C. Then, the value of each of the pixels of the spatial-domain data A2c is compared with a central gradation value by the comparator 38, generating binary data A2c_bin, as shown in FIG. 6D.

Of the binary data A2c_bin, blackened portions (areas) serve as dot candidate positions in highlight areas HL and white portions (areas) serve as dot candidate positions in shadow areas SD.

As stated above, the binary data A2a_bin can be generated from the white noise pattern WH as follows. The white noise pattern WH is converted into the frequency-domain pattern. The frequency-domain pattern is subjected to a bandpass filtering process at the pattern frequency r by the pattern frequency bandpass filter 34. The frequency-domain pattern is converted again into the space-domain pattern. The space-domain pattern is digitized into the binary data A2a_bin. There is another method for obtaining binary data, in which the white noise pattern WH is filtered by a spatial filter having a certain pattern frequency in a space-domain and the space-domain pattern is digitized into the binary pattern. In this case, the spatial filter is a mask filter in which filter coefficients are arranged. Thus, a mask process is conducted, that is, each pixel value (0 or 1 in this embodiment) of the white noise pattern WH is weighted by each of the filter coefficients of the mask filter while the white noise pattern WH is scanned by the mask filter. By such a mask process, the space-domain data A2a of the continuous-tone image shown in FIG. 4C or other space-domain data can be obtained. Finally, the binary data, e.g., A2a_bin can be generated by digitizing the space-domain data A2a.

In practice, regarding laser beams from the multi-beam exposure unit 26 to the printing plate materials EM, it is preferable that an average periphery length proportion in the main scanning direction is as small as possible, when a diameter of a scanning line is varied in each of the beams in view of a beam diameter or beam intensity thereof. Further, when a rising or falling edge of each of the laser beams is varied, an edge in the auxiliary scanning direction, i.e., a periphery length is also affected. Furthermore, in a printing process, a binary image is sometimes rotated by 90° for imposition or the like. In this case, the assumed main scanning direction may be replaced with the auxiliary scanning direction. For such a case, the pattern frequency bandpass filter 34 for obtaining the data shown in FIGS. 6A and 6B is preferable. Further still, various pattern frequency bandpass filters 34 having desirable characteristics can be prepared for another output system 22, or for certain images to be printed. For example, any set of maximum and minimum intensities can be chosen, e.g., 0.6 and 0.0; or 0.7 and 0.2, respectively, though in the graphs shown in FIGS. 4B, 5B and 6B, the maximum and minimum intensities are 1.0 and 0.0, respectively. Also, any intensity distribution can be set without choosing the rectangular or sinusoidal intensity distribution (function).

In this embodiment, the binary data A2a_bin shown in FIG. 4D will be used for generating the threshold matrix TM that is capable of generating a dot pattern in which unevenness of hue or shade in the image is less visually perceptible.

Then, in step S3, the number Dn of dots of a minimum size (also referred to as the number of dots of a new minimum size dots or the number of new dots of a minimum size) to be newly set at a present dot percentage is determined with respect to the dot percentage for which a dot pattern has been determined. The number Dn(P) of new dots of a minimum size to be established at each dot percentage P% is expressed as Dn(P) = Ds(P) - Ds(P - 1) where Ds(P) represents the number of accumulated dots (accumulated values) at each dot percentage P.

Specifically, in step S3, when candidate positions for dots are successively determined as the dot percentage is incremented, the number Dn(P) of dots of a minimum size to be newly established at a present dot percentage P is determined with respect to the preceding dot percentage P - 1 for which a dot pattern has already been determined.

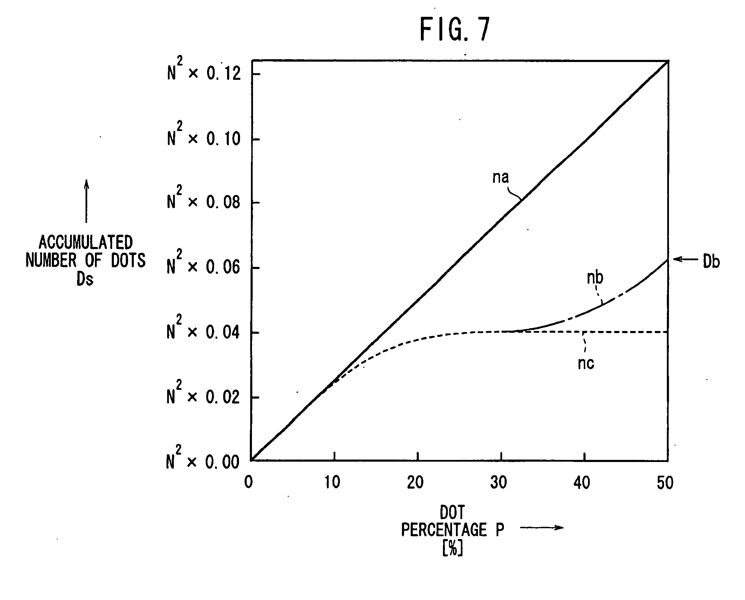

When a dot pattern has a dot percentage P with respect to the size N × N of a threshold matrix TM, the total number of blackened pixels in the dot pattern corresponding to the size N × N of the threshold matrix TM is calculated as N × N × P/100. If all the dots of a dot pattern comprise only dots of a minimum size as 2 × 2 (n = 4)-pixel dots, then since the number of new dots of a minimum size at each dot percentage P is expressed as Ds(P) = (N × N × P/100)/n, it is given as (N × N × P/100)/n (n = 4), as indicated by a solid straight curve na in FIG. 7, for example.

At this time, the number Dn(P) of dots of a minimum size to be newly established at this dot percentage P is expressed as Dn(P) = Ds(P) - Ds(P - 1) = (N × N/100)/n.

The vertical axis of the graph shown in FIG. 7 represents a calculated accumulated value Ds of the number Dn of dots of a minimum size to be newly established (the number of new dots). Actually, as the dot percentage P becomes greater than 25%, since adjacent dots of a minimum size become closer to each other, the actual number of dots in a dot pattern is smaller than the accumulated value of the number Dn of new dots shown in FIG. 7.

If the number Dn of new dots are determined at each dot percentage according to the solid straight curve na in FIG. 7 which represents the accumulated value of the number Dn of new dots, then the threshold matrix produces a conventional FM screen, which causes disadvantages in that a dot gain tends to become large and images are reproduced unstably when images are printed or films are output in an intermediate printing process.

According to an embodiment of the present invention, in view of the fact that the pattern frequency is low in highlight areas where the dot percentage is less than 10%, all dots comprise dots of a minimum size in those highlight areas. In intermediate tone areas where the dot percentage ranges from 10% to 50%, the size of dots is increased from the minimum size, e.g., dots composed of 5 pixels (2 × 2 + 1) or more are used. Specifically, in a dot percentage range from 10% to 25%, the number Dn of new dots to be established at each dot percentage is gradually reduced, as indicated by a broken-line curve nc which represents the accumulated value of the number of new dots. In a dot percentage range from 25% to 50%, the number Dn of new dots to be established at each dot percentage is set to zero. Alternatively, the number Dn is gradually increased, as indicated by the dot-and-dash-line curve nb which represents the accumulated value of the number of new dots.

In the present embodiment, since the output resolution R of the output system is 100 pixels/mm or 10 µm/pixels, and the pattern frequency r of the intermediate tone dot pattern is r = 20 c/mm, each side of the N × N-pixel area has to contain 20 blackened dots (one dot comprises 2 × 2 pixels with r c/mm) of a minimum size, each composed of 4 pixels per 100 pixels/mm (R pixels/mm). In terms of the size of the N × N-pixel threshold matrix TM, the accumulated value Ds of the number Dn of new dots up to the intermediate tone areas is represented by (N/(R/r))² = N × N × (r/R)² = N × N × (20/100)² = N × N × 0.04.

With the above settings, in the intermediate tone areas where the dot percentage ranges from 10% to 50%, the total number of pixels of a dot pattern generated by the threshold matrix TM at each dot percentage is the same as with the conventional FM screens, i.e., the dot percentage is the same, but the number of dots is smaller than with the conventional FM screens. Therefore, a periphery length representing the sum of the lengths of the peripheries of all the dots of the dot pattern is smaller than with the conventional FM screens.

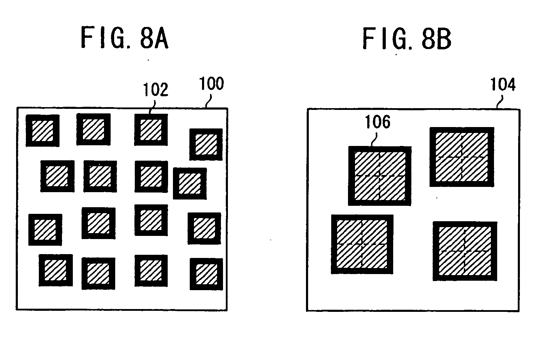

In the present description, the periphery length, for example, as can be seen from dot patterns 100, 104 having the same area shown in FIGS. 8A and 8B, the dot pattern 100 contains sixteen 1 × 1-pixel dots 102. The dot pattern 104 contains four 2 × 2-pixel dots 106. Though the total area of the dots 102 of the dot pattern 100 and the total area of the dots 106 of the dot pattern 104 are the same as each other, the dot patterns 100, 104 have different periphery lengths. Stated otherwise, though the dot pattern 100 and the dot pattern 104 have the same dot percentage, the sum of the lengths of white/black boundaries per unit area of the dot pattern, i.e., the dot periphery length of the dot pattern 100, is twice as long as the periphery length of the dot pattern 104. Specifically, the dot periphery length of the dot pattern 100 is calculated as 16 (dots) × 4 = 64 while the dot periphery length of the dot pattern 104 is calculated as 4 (dots) × 8 = 32.

If the relationship of the accumulated value Ds of the number Dn of dots with respect to the dot percentage is established according to the curve nc, then an increase in the dot gain in the intermediate tone areas is made smaller than with an FM screen where the accumulated value Ds is established according to the curve na. In addition, a sufficient resolution is provided in all the range of dot percentages as with the conventional FM screens. If the number Dn of new dots in the intermediate tone areas is not increased according to the curve nc, i.e., is unduly reduced, then each dot becomes so large as to make graininess visible, lowering the quality of images, with the result that the pattern frequency of the dot pattern becomes coarse.

Specifically, even if the number Dn of new dots is established at each dot percentage according to the curve nc, when the dot percentage exceeds 25%, adjacent dots start contacting each other, and the accumulated value Ds of the number Dn of dots according to the curve nc is not reached.

Actually, therefore, as indicated by the dot-and-dash-line curve nb which represents the accumulated value of the number of new dots in FIG. 7, the number Dn of new dots of a minimum size is established such that it increases again a substantially constant number after the dot percentage exceeds 25% and until it reaches 50%. According to the curve nb, dots are prevented from contacting each other in the vicinity of the dot percentage of 50%, thus avoiding the occurrence of a tone jump.

In the dot percentage range from 50% to 100%, the accumulated value Ds of the number Dn of new dots may be established according to a curve which is in symmetric relation to the curves nc, nb with respect to the vertical line at the dot percentage of 50%. In the dot percentage range from 50% to 100%, the curve is analyzed from 100% toward 50%, and the number of new dots of white pixels (2 × 2 white pixels) is considered rather than the number Dn of new dots of blackened pixels.

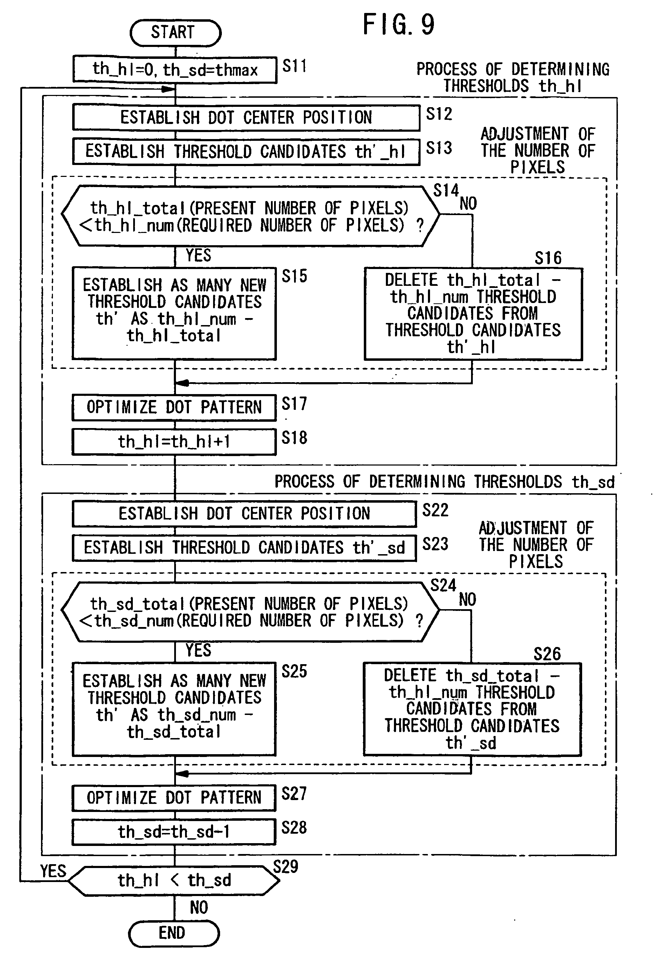

A process of determining thresholds th alternately successively in ascending and descending orders in the highlight area HL and the shadow area SD in step S4 will be described below with reference to a flowchart shown in FIG. 9. For the sake of brevity, the process of successively determining thresholds th in the highlight area HL will mainly be described below. In the shadow area SD, the same process of successively determining thresholds th is carried out.

In step S11, the initial values of thresholds th_hl {0 through (thmax-1)/2} in the highlight area (0% through 50%) and thresholds th_sd {thmax through (thmax-1)/2} in the shadow area (100% through 50%) are determined to be th_hl = 0, th_sd = thmax, respectively.

In the flowchart shown in FIG. 9, positions (array) for placing all thresholds th up to the dot percentage of 50% are determined in the order of threshold 0 → threshold thmax → threshold 1 → threshold thmax-1 → ··· → threshold (thmax-1)/2.

For determining an array (placement positions) of thresholds th_hl in the highlight area, dot center positions are established in step S12. In step S12, dot center positions of the number Dn of new dots determined in step S3 for the dot percentages, among the dot candidate positions in the highlight area HL of the blackened portion (region) of the binary data A2a_bin (see FIG. 4D) determined in step S2, are established.

As described in Japanese Laid-Open Patent Publication No. 8-265566, the dot center positions are determined such that the dots established (assigned) by the thresholds th_hl whose placement positions are to be determined in the present threshold matrix TM are established in positions most spaced from the presently existing dots determined by the thresholds th_hl-1 for the preceding gradation where the placement positions of the thresholds th in the threshold matrix TM have already been determined.

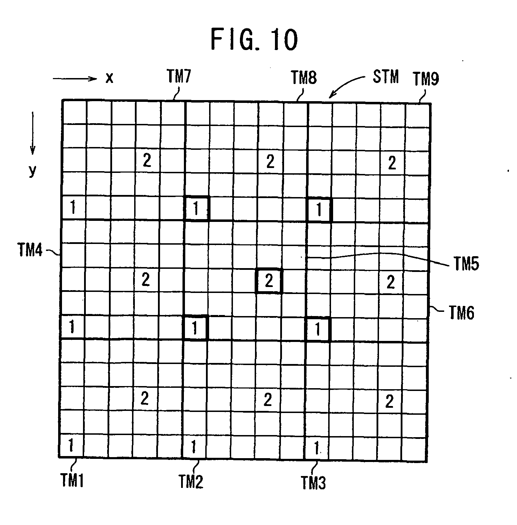

For an easier understanding, the process will be described with reference to FIG. 10 which shows a superthreshold matrix STM made up of nine threshold matrixes TM1 through TM9 each having 25 thresholds. When positions for placing thresholds are determined in an ascending order from the highlight areas HL of the threshold matrixes TM or in a descending order from the shadow areas SD thereof, central positions of newly placed thresholds th_hl are determined such that the already determined positions for placing thresholds th ("1" in FIG. 10) and the positions for newly placing thresholds th_hl ("2" in FIG. 10) are most spaced from each other in the threshold matrixes TM including a central threshold matrix (a 5 × 5 threshold matrix in FIG. 10) TM5 and other threshold matrixes TM1 through TM4, TM6 through TM9 of the same threshold layout which are disposed around the central threshold matrix TM5 as eight nearby threshold matrixes in FIG. 10.

In the example shown in FIG. 10, the central threshold "2" in a thick-line frame which is disposed within the threshold matrix TM5 is placed in either a position which contains a point contacted by four circles around respective four thresholds "1" in thick-line frames positioned around the central threshold "2" or a position which is closest to the above position and represents a blackened portion of the binary data A2a_bin (see FIG. 4D).

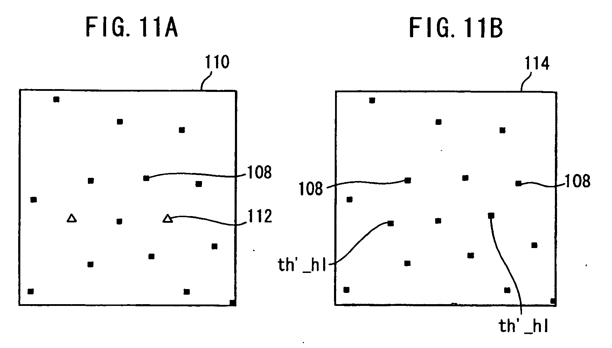

Specifically, as shown in FIG. 11A, positions 112 marked with Δ, for example, in a dot pattern 110 which is made up of dots 108 based on the thresholds th determined up to present are determined as central positions for placing dots.

Then, in step S13, candidates (threshold candidates) th'_hl for positions for placing thresholds are established. In this case, 2 × 2 (n = 4)-pixel dots of a minimum size determined in step S1 around the central positions for placing dots which are determined in step S12 are established (placed), and used as candidates for placing new thresholds, i.e., threshold candidates th'_hl.

Specifically, as shown in FIG. 11B, the threshold candidates th'_hl for the 2 × 2 (n = 4)-pixel dots are set in the dot placing positions 112 marked with Δ in FIG. 11A, thus producing a dot pattern 114.

Then, in steps S14 through S16, it is determined whether the total number of pixels of a dot pattern generated by the threshold matrixes TM where the layout of the thresholds th is determined up to present, corresponds to the present dot percentage or not, thereby correcting the total number of pixels. The dot pattern is generated as follows: The image data generator 12 generates continuous-tone image data (image data I for generating a screen tint) of a gray pattern (whose pixel values are the same) corresponding to the dot percentage. The comparator 16 compares the generated continuous-tone image data with the threshold matrixes TM stored in the threshold matrix storage unit 14 and including thresholds up to the threshold th_hl-1 which have been determined up to present. Binary data H produced from the comparator 16 are supplied to the dot pattern generator 18, which produces dot pattern data Ha. A dot pattern based on the dot pattern data Ha is displayed on the display unit 20b or the like.

In step S14, it is determined whether a present pixel count th_hl_total which is the sum of the total number of pixels based on the thresholds 0 through th_hl-1 whose placement positions have already been determined and the total number of pixels based on newly established threshold candidates th'_hl, is smaller than a required pixel count th_hl_num = N × N × th/thmax required at the present dot percentage or not (th_hl_total < th_hl_num).

If the present pixel count th_hl_total is smaller than the required pixel count th_hl_num, then since it is necessary to add as many pixels as the difference (th_hl_num - th_hl_total) which is produced by subtracting the present pixel count th_hl_total from the required pixel count th_hl_num, new threshold candidates th' are established as dots for adding those pixels from the binary data A2a_bin in step S15.

If the present pixel count th_hl_total is greater than the required pixel count th_hl_num, then since it is necessary to delete as many pixels as the difference (the present pixel count th_hl_total - the required pixel count th_hl_num), dots for deleting those pixels are selected and deleted from the dots based on the newly established threshold candidates th'_hl in step S16.

In step S16, of the dots making up the dot pattern, several dots may possibly be smaller than dots of a minimum size. In the present embodiment, because the dots of a minimum size are 2 × 2-pixel dots, the total number of pixels of the dot pattern which is made up of the dots of a minimum size is a multiple of 4. If the total number of dots is adjusted in order to equalize dot percentages, 3-pixel dots, 2-pixel dots, or 1-pixel dots, which are produced by deleting one, two, or three pixels from each of 2 × 2-pixel dots, may be necessary.

In step S15, as disclosed in Japanese Laid-Open Patent Publication No. 2001-292317, a dot pattern (binary image data) in the spatial domain, which is made up of the dots based on the thresholds 0 through th_hl-1 whose placement positions have already been determined and the dots based on the newly established threshold candidates th'_hl is FFTed into a dot pattern in the frequency domain by the FFT unit 32, after which high frequencies in the dot pattern are cut off by an LPF (Low-Pass Filter) 40. Then, the dot pattern is IFFTed back into a dot pattern in the spatial domain by the IFFT unit 36, after which low-frequency components are extracted from the dot pattern. Positions where the extracted low-frequency components are weakest are set to threshold candidates th' to be added. However, if a dot pattern having a dot percentage of 50% is established in step S2, then positions where the low-frequency components are weakest within blackened pixels of the dot pattern having the dot percentage of 50% may be set to threshold candidates th' to be added.

A process of extracting positions where low-frequency components are weakest will be described below in greater detail. When a dot pattern is FFTed into a dot pattern in the frequency domain, since frequency components present in the repetitive frequency of the threshold matrix TM are noise components (low-frequency components), the dot pattern is filtered by the LPF 40 to extract the low-frequency components.

Since the noise components are perceived by the human being, the low-frequency components are extracted by a human visual characteristic filter 42, used as the LPF 40, which has a sensitivity level of 0 at a spatial frequency of 0 c/mm, a maximum sensitivity level of 1 in the vicinity of a spatial frequency of 0.8 c/mm, a sensitivity level of about 0.4 at a spatial frequency of 2 c/mm, and a sensitivity level of about 0 at a spatial frequency in the range from 6 to 8 c/mm. A model of human visual frequency characteristics is described in detail in "Design of minimum visual modulation halftone patterns" written by J. Sullivan, L. Ray, and R. Miller, IEEE Trans. Syst. Man Cybern., vol. 21, No. 1, 33 - 38 (1991).

Then, the low-frequency components extracted by the LPF 40 are IFFTed into low-frequency components in the spatial domain by the IFFT unit 36. Because the produced low-frequency components have intensity variations, an image made up of these low-frequency components and the positions of the threshold candidates th' in the threshold matrix TM are compared with each other, and positions where the low-frequency components are weakest (the values are smallest) are set to threshold candidates th'_hl.

In the shadow area SD, positions where the low-frequency components are strongest (the values are greatest) may be set to threshold candidates th'_sd.

In step S16, low-frequency components may similarly be extracted, and pixels may be deleted from dots in positions where the low-frequency components are strongest (the values are greatest), of the new threshold candidates th'_hl. In the shadow area SD, pixels may be deleted from dots based on the new thresholds th'_sd in positions where the low-frequency components are weakest (the values are smallest).

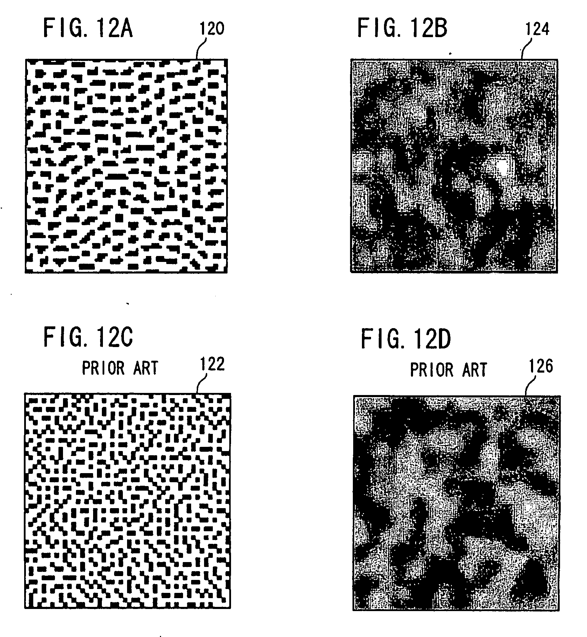

FIG. 12A shows a dot pattern 120 having a dot percentage of 30% where the dots of a minimum size are 2 × 2-pixel dots, according to the present embodiment, the dot pattern 120 being generated by the above process. FIG. 12C shows a dot pattern 122 of the conventional 2 × 2-pixel dot FM screen.

FIGS. 12B and 12D show dot patterns 124, 126, respectively, with dark and light areas which are produced by processing the dot patterns 120, 122 with the visual characteristic filter 42 used as the LPF 40. It can be seen that the dot pattern 120 shown in FIG. 12A according to the present embodiment has smaller intensity variations in the dark and light areas and hence smaller amplitudes than the conventional dot pattern 122 shown in FIG. 12C.

In step S15 or S16, as disclosed in Japanese Laid-Open Patent Publication No. 2002-368995, when the dot pattern is IFFTed by the IFFT unit 36 to produce the low-frequency components in the spatial domain, the low-frequency components may further be FFTed by the FFT unit 32, and particular frequency components may be extracted in a descending intensity order by a particular frequency component extractor 44. The extracted particular frequency components may be IFFTed in a descending intensity order to produce images in the spatial domain, and positions where intensity components are weakest, of the positions which do not intensify these images, may be set to threshold candidates th' or threshold candidates th'_hl.

According to the above processing in steps S12 through S16, a predetermined number of thresholds th may be established on the threshold matrix TM corresponding to positions where dots are newly assigned on the dot pattern.

In step S17, the dot pattern generated by the determined thresholds th is optimized. This process of optimizing the dot pattern is not required if a high-quality dot pattern has been generated by the processing up to step S16.

The process of optimizing the dot pattern may be either one or both of the method disclosed in Japanese Patent No. 3400316 and the process disclosed in Japanese Laid-Open Patent Publication No. 2002-369005.

Specifically, according to the method disclosed in Japanese Patent No. 3400316, low-frequency components are extracted from the dot pattern generated by the thresholds th_hl. Of the extracted low-frequency components, pixels that are placed in positions where the intensity is strongest and pixels that are placed in positions where the intensity is weakest are switched around such that the former pixels will be white pixels and the latter pixels will be blackened pixels, thereby reducing the intensities of the low-frequency components. The blackened pixels have to be pixels attached to the periphery of dots, i.e., pixels held in contact with the periphery of dots, and the threshold th of the blackened pixels is of value equal to the threshold th of the dots.

According to the process disclosed in Japanese Laid-Open Patent Publication No. 2002-369005, as with the process disclosed in Japanese Laid-Open Patent Publication No. 2002-368995, the dot pattern generated by the thresholds th is FFTed, thereafter filtered by the visual characteristic filter 42 and the LPF 40, and then IFFTed into low-frequency components in the spatial domain. The low-frequency components are FFTed to extract frequency components in a descending intensity order. The extracted particular frequency components are IFFTed in a descending intensity order to produce images in the spatial domain, and pixels in positions where intensity components are weakest, of the positions which do not intensify these images and pixels that are placed in positions where the intensity is weakest are extracted and switched around, thereby reducing the intensities of the low-frequency components. The extracted pixels have to be pixels attached to the periphery of dots, and the threshold th of the blackened pixels is of value equal to the threshold th of the dots.

In the process of extracting low-frequency components in steps S14 through S17, as disclosed in Japanese Laid-Open Patent Publication No. 2002-369005, a density image corresponding to a dot pattern output from an image output apparatus may be simulated, i.e., predicted, by a density image simulator (predictor) 46, and low-frequency components may be extracted from the density image. In this case, a test pattern is actually output from the output system 22, and the density image simulator 46 measures how one dot of the original dot pattern is output on the test pattern with dark and light areas, thereby calculating the dot percentage of a density image close to an actual density image from the dot pattern.

An amount of exposure from the shape of the laser beam used in the output system 22 is integrally calculated, and a density image is predicted from the gamma characteristics of the photosensitive material on the printing plate materials EM.

The prediction of a density image based on calculations will be described in detail below. A simulation shape for computer calculations of a laser beam for forming 1 × 1- pixel dots, 2 × 2-pixel dots, ··· on a recording medium such as a film F or the like is determined. The laser beam has a shape close to the Gaussian distribution which can substantially be expressed using a beam diameter that is determined by the maximum value 1/e² of the amplitude. The amount of exposure for each dot is calculated from the laser beam and the dot pattern.

Then, the amounts of exposure for the respective dots, i.e., 1 × 1-pixel dots, 2 × 2-pixel dots, ··· are converted into densities of the dots using the exposure characteristics, i.e., the gamma characteristics, of the photosensitive material such as a film or the like. A density image (density-simulated image) is obtained from the densities of the dots thus determined. Low-frequency components can be extracted from the density image according to the above process using FFT. Actually, low-frequency components that are extracted from a density image can often be more effective to remove noise components, rather than low-frequency components extracted from a dot pattern.

In this manner, the positions of thresholds th_hl in the threshold matrix are determined.

Then, in step S18, the newly established thresholds th_hl are set to thresholds th_hl+1 for the next gradation (th_hl = th_hl+1).

Similarly, thresholds th_sd for the shadow area SD are determined in steps S22 through S28.

In step S29, the thresholds th_hl determined from the highlight area HL and the thresholds th_sd determined from the shadow area SD are compared with each other for magnitude, and thresholds th_hl and thresholds th_sd are determined until they are of the same value, i.e., until the dot percentage of 50% is achieved. When thresholds th_hl and thresholds th_sd are of the same value, the generation of the threshold matrix is finished.

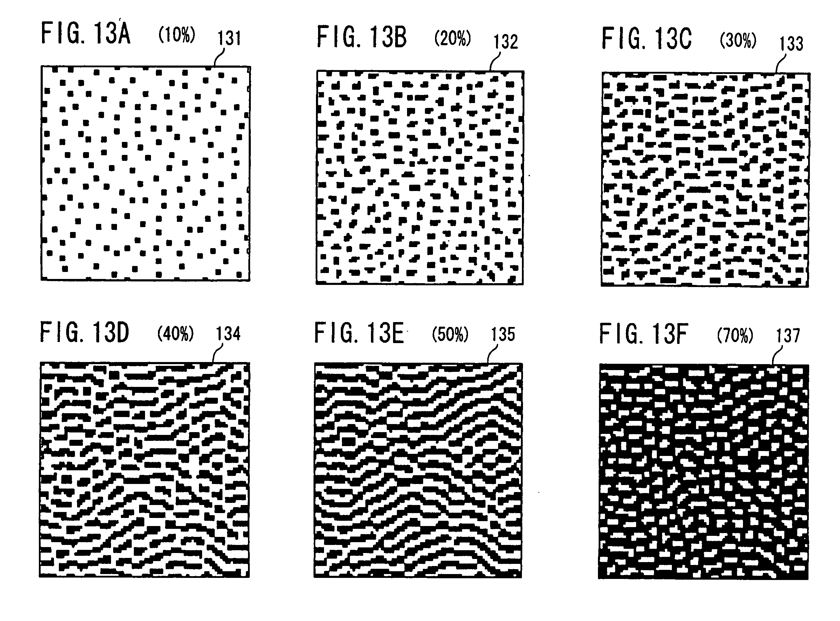

FIGS. 13A through 13F show dot patterns 131 through 135, 137, respectively, which are part of dot patterns having dot percentages of 10%, 20%, 30%, 40%, 50%, and 70% that are finally generated by dot pattern generator 18 by comparing the thus generated threshold matrix TM with continuous-tone image data of gray patterns having corresponding dot percentages with the comparator 16.

The dot pattern 137 having the dot percentage of 70% may be a pattern that is generated by reversing the white and black areas of the dot pattern 133 having the dot percentage of 30%, or an independently generated pattern.

The dot patterns 131 through 135, 137 shown in FIGS. 13A through 13F are generated by selecting the dot-and-dash-line curve nb which represents the accumulated value of the number of new dots in FIG. 7. The dot pattern 131 having the dot percentage of 10% is made up of only 2 × 2-pixel dots of a minimum size. The dot pattern 132 having the dot percentage of 20% include a reduced proportion of 2 × 2- pixel dots of a minimum size and pixels (including 4- through 12-pixel dots) corresponding to the dot percentage that are attached to the periphery of the existing dots (2 × 2-pixel dots). In dot percentages from 25% to 30%, dots of a minimum size are not newly assigned, but pixels are attached to the existing dots, thereby increasing the blackened ratio. In dot percentages of 35% and higher, more dots of a minimum size are newly assigned. Since the newly assigned dots serve to forcibly join adjacent dots, the junctions between the dots can be distributed. With the above settings, it is possible to generate a threshold matrix TM capable of generating a dot pattern for smoothly reproducing gradations.

According to the above embodiment, there is provided a method of generating a threshold matrix for converting a continuous-tone image into a dot pattern representing a binary image, the method comprising the steps of: determining a pattern frequency r at a predetermined dot percentage of an intermediate tone (step S1); converting a white noise pattern WH into a frequency-domain pattern; bandpass-filtering the frequency-domain pattern at the pattern frequency r by the pattern frequency bandpass filter 34; converting the pattern into a space-domain pattern again; digitizing the pattern for obtaining a binary pattern (A2a_bin or A2b_bin or A2c-bin); and determining dot candidate positions for placing dots based on the binary pattern to obtain an array of the threshold matrix (steps S2 through S4). In the method, a graph in frequency-domain is generated by the pattern frequency bandpass filter 34 at the pattern frequency r. This graph shows that frequency-domain data AFFT2c has isotropy for angles and that the intensity distribution is modulated based on the angles. Thus, the dot pattern forming the binary image has the pattern frequency r, and the dot periphery length in the dot pattern can be short in a direction perpendicular to the direction in which the intensity is weakened.

In this case, when the pattern frequency bandpass filter 34 having the pattern frequency r is chosen for obtaining the frequency-domain data AFFT2a or AFFT2b, in which the intensity of the dot pattern at angles at least corresponding to a main scanning direction is weakened, the dot periphery length in the main scanning direction MS in the dot pattern can be short.

Further, when the pattern frequency bandpass filter 34 having the pattern frequency r is chosen for obtaining the frequency-domain data AFFT2c, in which the intensity distribution of the dot pattern at angles corresponding to the main scanning direction and to the auxiliary scanning direction is weakened, the dot periphery lengths in the main scanning direction MS and in the auxiliary scanning direction AS in the dot pattern can be distributed uniformly.

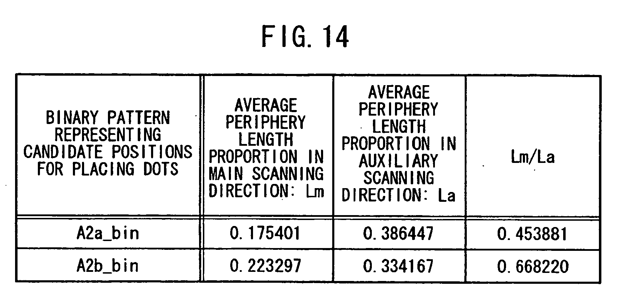

FIG. 14 is a table showing average periphery length proportions Lm in the main scanning direction, average periphery length proportions La in the auxiliary scanning direction and ratios Lm/La between the average periphery length proportion in the main scanning direction and average periphery length proportion in the auxiliary scanning direction, concerning binary patterns A2a_bin and A2b_bin representing candidate positions for placing dots in FIGS. 4D and 5D, respectively.

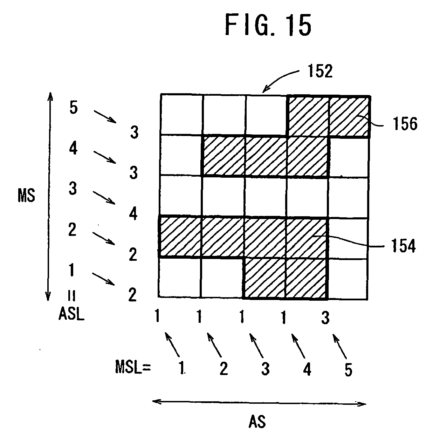

With reference to FIG. 15, the average periphery length proportion Lm in the main scanning direction, the average periphery length proportions La in the auxiliary scanning direction and the ratio Lm/La between the average periphery length proportion in the main scanning direction and average periphery length proportion in the auxiliary scanning direction will be described hereinafter. In FIG. 15, a dot pattern 152 is defined by five scanning lines in the main scanning direction (referred to as main scanning lines) MSL and five scanning lines in the auxiliary scanning direction (referred to as auxiliary scanning lines) ASL. The dot pattern 152 includes dots 154 with six blackened pixels and dots 156 with five blackened pixels.

Periphery lengths concerning the main scanning lines MSL 1 through 5 indicated by bold lines are 1, 1, 1, 1 and 3, respectively. The average periphery length proportion Lm in the main scanning direction is calculated as Lm = (1/5 + 1/5 + 1/5 + 1/5 + 3/5)/5 = 0.28. In the calculation of "1/5 + 1/5 + 1/5 + 1/5 + 3/5", each denominator indicates the number of pixels in one main scanning line. In the calculation of "(1/5 + 1/5 + 1/5 + 1/5 + 3/5)/5", the denominator of the entire expression indicates the number of the main scanning lines in the dot pattern 152.

Periphery lengths concerning the auxiliary scanning lines ASL 1 through 5 indicated by bold lines are 2, 2, 4, 3 and 3, respectively. The average periphery length proportion La in the auxiliary scanning direction is calculated as La = (2/5 + 2/5 + 4/5 + 3/5 + 3/5)/5 = 0.56. Similarly to the case of the main scanning lines MSL 1 through 5, in the calculation of "2/5 + 2/5 + 4/5 + 3/5 + 3/5", each denominator indicates the number of pixels in one auxiliary scanning line. In the calculation of "(2/5 + 2/5 + 4/5 + 3/5 + 3/5)/5", the denominator of the entire expression indicates the number of the auxiliary scanning lines in the dot pattern 152. Thus, the ratio Lm/La equals to 0.5.

Turning to the table in FIG. 14, in each of the patterns, of the binary data A2a_bin in FIG. 4D and the binary data A2b_bin in FIG. 5D, the average periphery length proportion La in the auxiliary scanning direction is greater than the average periphery length proportion Lm in the main scanning direction. This is because both patterns are generated by filtering off the frequency components corresponding to the main scanning direction MS.

When the average periphery length proportion Lm in the main scanning direction is small, the unevenness of hue or shade in the image is less visually perceptible even if the dot pattern has unevenness with respect to the main scanning direction MS.

If the ratio Lm/La is increased, unevenness of hue or shade in the image in the auxiliary scanning direction AS may be generated.

Thus, in a threshold matrix TM for converting a continuous-tone image into a dot pattern representing a binary image, when the continuous-tone image whose pixel value corresponds to a dot percentage of 50% is digitized into a dot pattern by the threshold matrix TM, it is preferable that a ratio Lm/La of an average periphery length proportion Lm in the main scanning direction to an average periphery length proportion La in the auxiliary scanning direction ranges from 0.4 to 0.8. Especially, when the unevenness in the main scanning direction MS is more likely to appear than the unevenness in the auxiliary scanning direction AS, it is preferable that the ratio Lm/La ranges from 0.5 to 0.7.

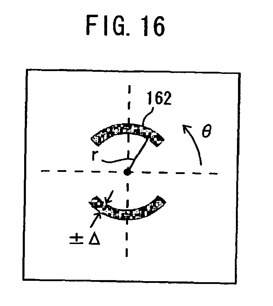

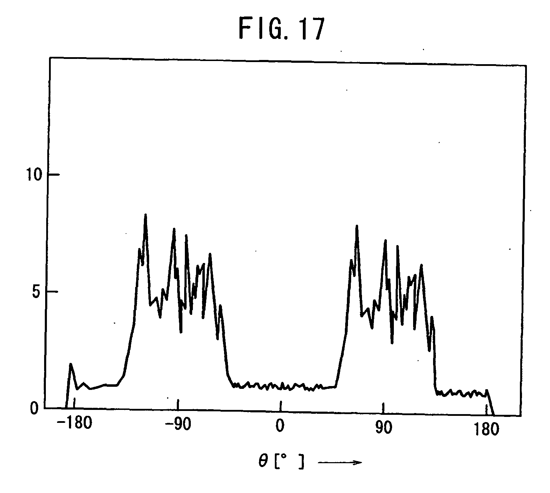

FIG. 16 is a graph showing frequency-domain data 162 obtained from the threshold matrixes TM FFTed by the FFT unit 32 to convert into frequency-domain data. The threshold array for thresholds 0 through 255 of the threshold matrix TM is determined. In FIG. 16, an FFT power distribution is indicated two-dimensionally, and 0 component of the FFT power spectrum in the frequency-domain data 162 is indicated in white while maximum component of the FFT power spectrum in the frequency-domain data 162 is indicated in black. In FIG. 17, a power spectrum is shown, in which power vs. angle θ of the frequency-domain data 162 of the threshold matrix is presented. In FIG. 16, data at frequency 0 is not plotted. FIG. 16 shows that the frequency-domain data 162 has isotropy for angles θ, and FIG. 17 shows that the frequency-domain data 162 are indicated by a graph of specific pattern frequency in which intensity is modulated for the angles θ. In this case, the graph of the frequency-domain data 162 shows that the intensity distribution of a dot pattern at angles corresponding to the main scanning direction MS is weakened.

In the above description, only one printing plate has been described. For reproducing color images, however, it is customary to employ a 7-color printing process including separated C, M, Y, K colors and R, G, B colors, or a 6-color printing process including C, M, Y, K colors, G color, and orange color. Though different threshold matrixes having m threshold matrix sizes may be generated with respect to m (m > 4) colors, any interference between complementary colors is small as dot percentages for complementary colors are hardly increased. Therefore, a threshold matrix for a color may also be used for its complementary color. For example, when inks of C, M, Y, K colors and R, G, B colors are used, one threshold matrix may be used for M and G printing plates, one threshold matrix for C and R printing plates, and one threshold matrix for Y and B printing plates. Similarly, when inks of C, M, Y, K colors, G color, and orange color are used, one threshold matrix may be used for M and G printing plates, and one threshold matrix for C and orange printing plates.

Threshold matrixes thus generated may be used as follows.

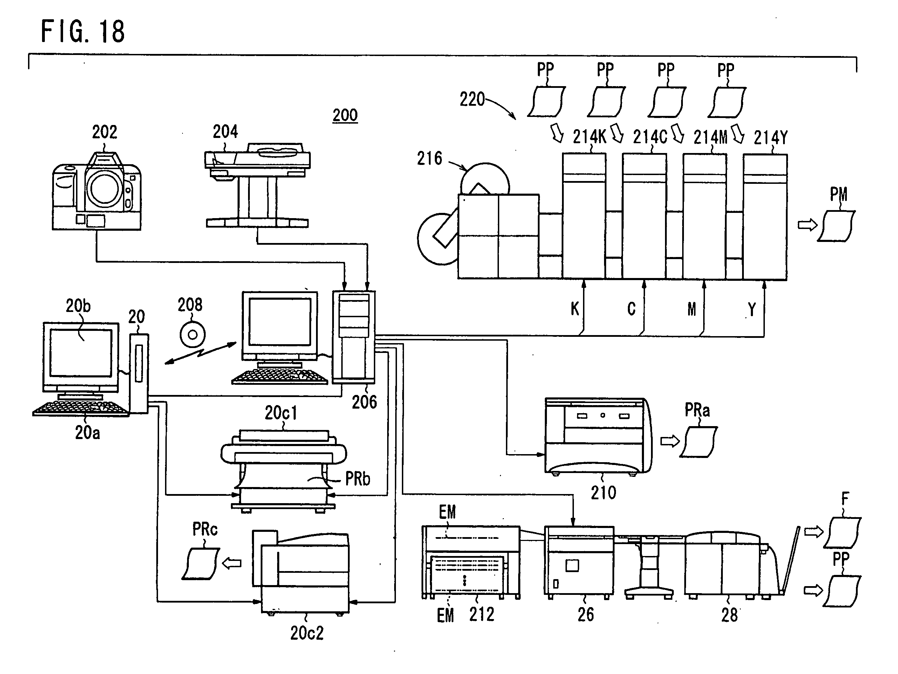

FIG. 18 shows a printing/platemaking system 200 incorporating threshold matrixes generated by the threshold matrix generating apparatus 20 of the threshold matrix generating system 10 shown in FIG. 1.

In the printing/platemaking system 200, RGB image data captured by a digital camera 202 as an image capturing unit or RGB image data (or CMYK image data) read by a plate input machine 204 as a scanner (image reader) are supplied to an RIP (Raster Image Processor) 206, which converts the RGB image data into CMYK image data.

The RIP 206 stores in its storage unit such as a hard disk or the like data of threshold matrixes TM (threshold matrix data) generated by the threshold matrix generating apparatus 20 and supplied through an optical disk 208 serving as a storage unit such as a CD-R or the like or through a communication link.

The RIP 206 compares the CMYK image data and the corresponding CMYK threshold matrix data with each other, and converts the CMYK image data into CMYK dot pattern data (CMYK image data).

The CMYK dot pattern data are then sent to a DDCP (Direct Digital Color Proofer) 210, which produces a print proof PRa on a sheet of paper. The DDCP 210 allows the operator to confirm noise components and printing quality on the print proof PRa before the image data are processed by a printing press 220. The sheet of paper used by the DDCP 210 may be a sheet of printing paper used by the printing press 220.

The RIP 206 delivers the CMYK dot pattern data to a color ink jet printer 20c1 which produces a printing proof PRb on a sheet of paper or a color electrophotographic printer 20c2 which produces a printing proof PRc on a sheet of paper.

The CMYK dot pattern data are also sent to the exposure unit 26 which serves as a filmsetter or a platesetter in the output system 22 such as a CTC apparatus or the like. If the exposure unit 26 is a filmsetter, the automatic developing machine 28 generates a film F. The film F is superposed on a printing plate material, and exposed to light by a planar exposure unit (not shown), producing a printing plate PP. If the exposure unit 26 is a platesetter as shown in FIG. 1, then the automatic developing machine 28 directly outputs a printing plate PP. The exposure unit 26 is supplied with printing plate materials EM from a magazine 212 of photosensitive materials (including plate materials).

CMYK printing plates PP are mounted on plate cylinders (not shown) in a K-plate printer 214K, a C-plate printer 214C, an M-plate printer 214M, and a Y-plate printer 214Y of the printing press 220. In the K-plate printer 214K, the C-plate printer 214C, the M-plate printer 214M, and the Y-plate printer 214Y, the CMYK printing plates PP are pressed against a sheet of printing paper supplied from a printing paper supply unit 216 to transfer the inks to the sheet of printing paper, thereby producing a printed material PM on which a color image is reproduced. If the printing press 220 is configured as a CTC apparatus, then the RIP 206 supplies the CMYK dot pattern data directly through a communication link, and the printing plates mounted on the plate cylinders are exposed to record image data and then developed directly into printing plates PP.

## Claims

1. A method of generating a threshold matrix for converting a continuous-tone image (I) into a binary image (H), the method comprising the steps of:
determining a pattern frequency at a predetermined dot percentage of an intermediate tone;
bandpass-filtering a white noise pattern corresponding to the predetermined dot percentage and binarizing the resulting filtered pattern to obtain a corresponding binary pattern;
determining an ON position in the obtained binary pattern as a dot candidate position for placing a dot;
determining the number of dots at each of dot percentages of intermediate tones and
placing the resulting determined number of dots at each of the dot percentages at the determined dot candidate position to obtain dot patterns,
and determining placement positions of thresholds in the threshold matrix depending on each of the dot patterns,
a main frequency of a bandpass characteristic of the bandpass filtering being substantially same as the pattern frequency, and intensity distribution of the bandpass characteristic being modulated based on angles.

2. A method according to claim 1, wherein the intensity distribution of the bandpass characteristic at angles at least corresponding to a main scanning direction of the binary image is weakened.

3. A method according to claim 1, wherein the intensity distribution of the bandpass characteristic at angles corresponding to a main scanning direction and to an auxiliary scanning direction of the binary image is weakened.

4. A threshold matrix for converting a continuous-tone image (I) into a binary image (H), wherein
main frequency components obtained by conversion of the threshold matrix into frequency-domain data have a substantially constant frequency for all angles, and intensity distribution of the main frequency components is modulated based on the angles.

5. A threshold matrix according to claim 4, wherein the intensity distribution of the main frequency components at angles at least corresponding to a main scanning direction of the binary image is weakened.

6. A threshold matrix according to claim 4, wherein the intensity distribution of the main frequency components at angles corresponding to a main scanning direction and to an auxiliary scanning direction of the binary image is weakened.

7. A method according to claim 1, wherein the continuous-tone image whose pixel value corresponds to a dot percentage of 50 % is digitized into a binary image by the threshold matrix, main frequency components obtained by conversion from the binary image into frequency-domain data have a substantially constant frequency for all angles, and intensity distribution of the main frequency components is modulated based on the angles.

## Patentansprüche

1. Verfahren zum Generieren einer Schwellenwertmatrix zum Umwandeln eines Volltonbilds (I) in ein Binärbild (H), umfassend folgende Schritte:
Bestimmen einer Musterfrequenz eines vorbestimmten Punkteprozentsatzes eines Zwischentons;
Bandpass-Filtern eines Weißrauschen-Musters entsprechend dem vorbestimmten Punkteprozentsatz und Binär-Umsetzen des resultierenden gefilterten Musters, um ein entsprechendes Binärmuster zu gewinnen;
Bestimmen einer EIN-Position in dem gewonnenen Binärmuster als eine Punktekandidatenstelle zur Platzierung eines Punkts;
Bestimmen der Anzahl von Punkten bei jedem der Punkteprozentsätze der Zwischentöne; und
Platzieren der resultierenden bestimmten Anzahl von Punkten bei jedem der Punkteprozentsätze an der bestimmten Punktekandidatenstelle, um Punktemuster zu gewinnen, und Bestimmen von Platzierungsstellen von Schwellenwerten innerhalb der Schwellenwertmatrix abhängig von jedem der Punktemuster,
wobei eine Hauptfrequenz einer Bandpasskennlinie der Bandpassfilterung im wesentlichen die gleiche ist wie die Musterfrequenz, und eine Intensitätsverteilung der Bandpasskennlinie basierend auf Winkeln moduliert wird.

2. Verfahren nach Anspruch 1, bei dem die Intensitätsverteilung der Bandpasskennlinie bei Winkeln zumindest entsprechend einer Hauptabtastrichtung des Binärbilds geschwächt wird.

3. Verfahren nach Anspruch 1, bei dem die Intensitätsverteilung der Bandpasskennlinie bei Winkeln entsprechend einer Hauptabtastrichtung und einer Nebenabtastrichtung des Binärbilds geschwächt wird.

4. Schwellenwertmatrix zum Umwandeln eines Volltonbilds (I) in ein Binärbild (H), bei der
Hauptfrquenzkomponenten, gewonnen durch Umwandeln der Schwellenwertmatrix in Daten des Frequenzbereichs eine im wesentlichen konstante Frequenz für sämtliche Winkel aufweisen, und eine Intensitätsverteilung der Hauptfrequenzkomponenten basierend auf den Winkeln moduliert ist.

5. Schwellenwertmatrix nach Anspruch 4, bei der die Intensitätsverteilung der Hauptfrequenzkomponenten bei Winkeln zumindest entsprechend einer Hauptabtastrichtung des Binärbilds geschwächt ist.

6. Schwellenwertmatrix nach Anspruch 4, bei der die Intensitätsverteilung der Hauptfrequenzkomponenten bei Winkeln entsprechend einer Hauptabtastrichtung und einer Nebenabtastrichtung des Binärbilds geschwächt ist.

7. Verfahren nach Anspruch 1, bei dem das Volltonbild, dessen Pixelwert einem Punkteprozentsatz von 50% entspricht, durch die Schwellenwertmatrix zu einem Binärbild digitalisiert wird, Hauptfrequenzkomponenten, gewonnen durch Umwandeln aus dem Binärbild in Daten des Frequenzbereichs eine im wesentlichen konstante Frequenz für sämtliche Winkel aufweisen, und eine Intensitätsverteilung der Hauptfrequenzkomponenten basierend auf den Winkeln moduliert wird.

## Revendications

1. Procédé de génération d'une matrice de seuil pour convertir une image en dégradé (I) en une image binaire (H), le procédé comportant les étapes consistant à :
déterminer une fréquence de motif selon un pourcentage de point prédéterminé d'une tonalité intermédiaire ;
effectuer un filtrage bande passante d'un motif de bruit blanc correspondant au pourcentage de point prédéterminé et binariser le motif filtré résultant pour obtenir un motif binaire correspondant ;
déterminer une position MARCHE dans le motif binaire obtenu en tant que position candidate de point pour placer un point ;
déterminer le nombre de points à chacun des pourcentages de point de tonalités intermédiaires ; et
placer le nombre de points déterminé résultant à chacun des pourcentages de point à la position candidate de point déterminée pour obtenir des motifs de point et déterminer des positions de placement de seuil dans la matrice de seuil selon chacun des motifs de point,
une fréquence principale d'une caractéristique de bande passante du filtrage bande passante étant sensiblement la même que la fréquence de motif, et la distribution d'intensité de la caractéristique de bande passante étant modulée en fonction des angles.

2. Procédé selon la revendication 1, dans lequel la distribution d'intensité de la caractéristique de bande passante aux angles correspondant au moins à une direction de balayage principal de l'image binaire est affaiblie.

3. Procédé selon la revendication 1, dans lequel la distribution d'intensité de la caractéristique de bande passante aux angles correspondant à une direction de balayage principal et à une direction de balayage auxiliaire de l'image binaire est affaiblie.

4. Matrice de seuil pour convertir une image en dégradé (I) en une image binaire (H), dans laquelle
des composantes de fréquence principale obtenues par conversion de la matrice de seuil en données de domaine de fréquence présentent une fréquence sensiblement constante pour tous les angles, et une distribution d'intensité des composantes de fréquence principale est modulée en fonction des angles.

5. Matrice de seuil selon la revendication 4, dans laquelle la distribution d'intensité des composantes de fréquence principale aux angles correspondant au moins à une direction de balayage principal de l'image binaire est affaiblie.

6. Matrice de seuil selon la revendication 4, dans laquelle la distribution d'intensité des composantes de fréquence principale aux angles correspondant à une direction de balayage principal et à une direction de balayage auxiliaire de l'image binaire est affaiblie.

7. Procédé selon la revendication 1, dans lequel l'image en dégradé dont la valeur de pixel correspond à un pourcentage de point de 50% est numérisée en une image binaire par la matrice de seuil, les composantes de fréquence principale obtenues par conversion de l'image binaire en données de domaine de fréquence présentent une fréquence sensiblement constante pour tous les angles, et une distribution d'intensité des composantes de fréquence principale est modulée en fonction des angles.
